# EUROPÄISCHE PATENTANMELDUNG

(11) **EP 1 274 266 A1**
(43) Veröffentlichungstag der Anmeldung: **08.01.2003**
(21) Anmeldenummer: 01116043.9
(22) Anmeldetag: 02.07.2001
(51) Int. Cl.: H04Q 7/32

(54) **Verfahren zum Konfigurieren eines Mobiltelefons**

(71) Anmelder: SIEMENS AKTIENGESELLSCHAFT, 80333 München (DE)
(72) Erfinder: Prehofer, Christian, Dr., 81477 München (DE)

(57) **Zusammenfassung**

Die Erfindung betrifft ein Verfahren zum Konfigurieren eines Mobiltelefons, welches bereits zum Betrieb an einem Mobilfunknetz konfiguriert ist. Erfindungsgemäß ist vorgesehen, daß das Mobiltelefon für den Betrieb an einem weiteren gegenüber dem ersten Mobilfunknetz mit einem anderen Funk- und Protokollstandard arbeitenden Mobilfunknetz konfiguriert wird, indem aus dem ersten Mobilfunknetz ein das Mobiltelefon für den dem zweiten Mobilfunknetz zugrundeliegenden Funk- und Protokollstandard konfigurierendes Dienstprogramm heruntergeladen und gespeichert wird und indem das Dienstprogramm im Einflußbereich des zweiten Mobilfunknetzes aktiviert wird.

## Beschreibung

Die Erfindung betrifft ein Verfahren zum Konfigurieren eines Mobiltelefons, welches bereits zum Betrieb an einem Mobilfunknetz konfiguriert ist.

Ein zum Betrieb an einem bestimmten Mobilfunknetz mittels eines den entsprechenden Funk- und Protokollstandard beherrschenden Steuerprogramms konfiguriertes Mobiltelefon bzw. Endgerät ist auch in einem fremden Mobilfunknetz betreibbar, sofern die Funk- und Protokollstandards der beiden Mobilfunknetze identisch oder kompatibel sind. Um einen Mobiltelefonbenutzer in die Lage zu versetzen, bei einem Auslandsaufenthalt das eigene Mobiltelefon im ausländischen Fremdnetz benutzen zu können, sind sogenannte "International Roaming" - Abkommen vereinbart worden, denen ein gemeinsamer Funk- und Protokollstandard, wie z.B. GSM ("Global System for Mobile Communication") zugrunde liegt, so daß der Betrieb des eigenen Endgerätes in fremden Netzen im europäischen Ausland häufig möglich ist. Bei diesem Stand der Technik ist jedoch unbefriedigend, daß das Betreiben des eigenen Endgerätes in einem fremden Mobilfunknetz, dessen Funk- und Protokollstandard sich sich von dem bisherigen Mobilfunknetz unterscheidet, nicht möglich ist, da das Endgerät aufgrund der unterschiedlichen Funk- und Protokollstandards zwischen dem Endgerät und dem fremden Mobilfunknetz keine Verbindung zum fremden Mobilfunknetz etablieren kann.

Es besteht daher die Aufgabe, ein Verfahren zu schaffen, mit dem ein Endgerät auch in einem mit einem anderen Funk- und Protokollstandard arbeitenden fremden Mobilfunknetz betreibbar ist.

Die Aufgabe wird in verfahrenstechnischer Hinsicht dadurch gelöst, daß das Mobiltelefon für den Betrieb an einem weiteren gegenüber dem ersten Mobilfunknetz mit einem anderen Funk- und Protokollstandard arbeitenden Mobilfunknetz konfiguriert wird, indem aus dem ersten Mobilfunknetz ein das Mobiltelefon für den dem zweiten Mobilfunknetz zugrundeliegenden Funk- und Protokollstandard konfigurierendes Dienstprogramm heruntergeladen und gespeichert wird und indem das Dienstprogramm im Einflußbereich des zweiten Mobilfunknetzes aktiviert wird.

Charakteristisch für das erfindungsgemäße Verfahren ist mithin, daß in einem initialisierenden Verfahrensschritt ein zur Steuerung und Beherrschung des dem fremden Mobilfunknetz zugrundeliegenden Funk- und Protokollstandards dienendes Dienstprogramm bereits in dem heimischen Mobilfunknetz heruntergeladen wird und in einem weiteren Verfahrensschritt dieses Dienstprogramm im Bedarfsfall, d.h. bei einem Ortwechsel in den Einflußbereich des ausländischen Fremdnetzes, aktiviert wird. Durch die Aktivierung des Dienstprogramms wird die Steuerung des Mobiltelefons entsprechend den Erfordernissen des anderen Funk- und Protokollstandards aktualisiert und konfiguriert, so daß das Mobiltelefon in dem nach diesem anderen Standard arbeitenden fremden Mobilfunknetz einsetzbar und benutzbar ist.

In Abhängigkeit von der Art des bisherigen Mobilfunknetzes und dem verwendeten Endgerätetyp kann eine Ausgestaltung des erfindungsgemäßen Verfahrens darin bestehen, daß zum Herunterladen des Dienstprogramms das Profil des dem Mobiltelefon zugeordneten Benutzers und dessen Identität abgefragt und überprüft wird. Ferner werden zur Konfiguration des Mobiltelefons die in dem zweiten Mobilfunknetz verfügbaren Funk- und Protokollstandards ermittelt, wobei zur Übertragung ein geeigneter Funkmodus ermittelt wird. Diese Einzelschritte werden während des initialisierenden Verfahrensschrittes durchgeführt. In im Bedarfsfall durchzuführenden Verfahrenschritten wird zum Aktivieren des Dienstprogramms das Mobiltelefon in das zweite Mobilfunknetz eingebucht oder alternativ dazu das Dienstprogramm aktiviert und dadurch das Mobiltelefon in das zweite Mobilfunknetz eingebucht, wobei das Einbuchen in das zweite Mobilfunknetz auf verschiedenen Protokollebenen durchgeführt wird. Um Fehlfunktionen zu minimieren, kann eine Weiterbildung des erfindungsgemäßen Verfahrens darin bestehen, daß das übertragene und heruntergeladene Dienstprogramm auf Integrität überprüft wird, wobei auch die Authentizität bzw. Originalität überprüft werden kann, bevor das übertragene und heruntergeladene Dienstprogramm installiert wird und gemäß einer Weiterbildung der Erfindung von dem installierten Dienstprogramm Software aus dem zweiten Mobilfunknetz geladen wird. Dabei werden das übertragene und heruntergeladene Dienstprogramm und die dadurch installierte neue Software ausgetestet und wird bei einem positivem Testresultat auf einen dem anderen Funk- und Protokollstandard des zweiten Mobilfunknetzes entsprechenden Arbeitsmodus umgeschaltet. Zur Sicherheit wird in einem sogenannten Monitormodus der neue Arbeitsmodus laufend kontrolliert. Um das Endgerät an die Erfordernisse des heimischen Mobilfunknetzes anzupassen, wird bei Rückkehr in den Einflußbereich des ersten Mobilfunknetzes der diesem zugeordnete Arbeitsmodus reaktiviert, so daß das Endgerät nach dem alten Funk- und Protokollstandard interaktiv ist. Das erfindungsgemäße Verfahren ist auf vorteilhafte Weise flexibel einsetzbar, da das Dienstprogramm bei dem Netzbetreiber auf ständig aktualisierte Algorithmen, Daten und Protokolle zugreifen kann.

In vorrichtungstechnischer Hinsicht wird die oben angegebene Aufgabe bei einem zur Durchführung des erfindungsgemäßen Verfahrens vorgesehenen Mobiltelefon dadurch gelöst, daß das Mobiltelefon eine mit dessen Hardware und Schnittstellen zusammenwirkende Speichereinrichtung zur Aufnahme des Dienstprogramms aufweist. Dadurch ist das Endgerät an einen anderen Funk- und Protokollstandard anpaßbar, so daß bei im Fremdnetz aktiviertem Dienstprogramm das Endgerät einsetzbar ist. Aufgrund des Dienstprogramms ist das Mobiltelefon in Abhängigkeit von dem Betreiber des ersten Mobilfunknetzes, dem Betreiber des zweiten Mobilfunknetzes und den entsprechenden Funk- und Protokollstandards konfigurierbar ist. Dabei umfaßt das Dienstprogramm wenigstens einen Datensatz mit dem zweiten Mobilfunknetz zugeordneten Informationen. Diese Informationen erleichtern den Zugang zum fremden Netz und enthalten typischerweise:
- Verfügbare Dienste im fremden Mobilfunknetz,
- Adressen der für das Herunterladen verfügbaren Server,
- im fremden Mobilfunknetz zertifizierte bzw. erlaubte Softwareversionen,
- die typischerweise auf einer SIM-Karte gespeicherte Benutzeridentität, sowie
- Angabe einer gerätespezifischen Schnittstelle für die Übertragung.

Auf der Basis dieser Informationen sowie geeigneter protokollspezifischer Steuersoftware und Applikationssoftware ermöglicht das Dienstprogramm somit den Zugang zu dem fremden Mobilfunknetz und ist in der Lage, dort verfügbare Dienste zu nutzen. Vorteilhaft ergibt sich dabei ein relativ geringer Speicherplatzbedarf, da sich die von dem Dienstprogramm umfaßten Informationen nach den in einem bestimmten Zielland bzw. Fremdnetz etablierten Funk- und Protokollstandards richtet.

Nachstehend soll eine Ausführungsform des erfindungsgemäßen Verfahrens anhand eines Ausführungsbeispiels näher erläutert werden.

Ein bei einem deutschen Netzbetreiber, der im Ausführungsbeispiel T-mobil sein kann, angemeldeter Netzbenutzer mit einem nach dem erfindungsgemäßen Verfahren rekonfigurierbaren Mobilfunkgerät des Typs S77 von Siemens nutzt die Mobilfunkstandards UMTS FDD ("Universal Mobile Telecommunication System"; "Frequency Division Duplex") und GSM ("Global System for Mobile Communication"), wobei das Mobilfunkgerät softwaremäßig auf die entsprechenden Funkstandards und Protokolle eingestellt ist. Bei einem Standortwechsel des Netzbenutzers in ein anderes Land, beispielsweise China, das nur den Modus "FDD-China" unterstützt, kann Software für den Modus "FDD-China" für das Mobilfunkgerät von einem mit "siemens - china.china" bezeichneten Server heruntergeladen werden, indem eine bestimmte Paßwortkennung "t-mobil-siemens-s77" mittels des ftp-Protokolls ("File Transfer Protocol") eingegeben wird, wobei die Paßwortkennung auf den verwendeten Endgerätetyp hinweist.

Im weiteren Verfahrensablauf wird von dem Netzbenutzer noch im Inland bei dem inländischen Netzbetreiber T-mobil das entsprechende Dienstprogramm für das in Rede stehende Endgerät und für das Zielland China geladen. Bei vollzogenem Standortwechsel nach dem Zielland China, ergibt sich die Notwendigkeit, den Modus "FDD-China" zu nutzen, so daß das im Endgerät geladene Dienstprogramm aktiviert wird. Aufgrund des im Dienstprogramm enthaltenen Datensatzes verfügt das Dienstprogramm über die Information, daß in China der GSM-Standard verfügbar ist und führt über GSM die Einwahl und Anmeldung des Endgerätes bei dem Fremdnetz durch. In einem weiteren Verfahrensschritt wird die für "FDD-China" aktuelle Steuersoftware von dem Dienstprogramm auf dem Server "siemenschina.china" gefunden. Danach identifiziert das Dienstprogramm den Benutzer bei dem Server und lädt die aktuell verfügbare Steuersoftware auf das Endgerät mittels des ftp-Protokolls herunter, wobei auf den entsprechend neuen Arbeitsmodus umgeschaltet wird. Bei Rückkehr in das Inland wird mittels des Dienstprogramms der dort zugrundeliegende alte Arbeitsmodus reaktiviert.

Die von dem Dienstprogramm heruntergeladene Steuersoftware kann sowohl protokollspezifische Software als auch Applikationssoftware umfassen.

In Abhängigkeit von der Art des bisherigen Mobilfunknetzes und dem verwendeten Endgerätetyp können prinziell dem erfindungsgemäßen Verfahren folgende Einzelschritte zugrundegelegt werden:
- Ermitteln des Benutzerprofiles und der Benutzeridentität,
- Ermitteln des aktuellen Netzbetreibers und der dort verfügbaren Funkstandards
- Auffinden eines zur Übertragung geeigneten Funkmodus,
- Einbuchen in das Fremdnetz auf verschiedenen Protokollebenen,
- Auffinden von Servern, welche die gewünschte Software anbieten,
- Entscheiden, welche Server zum Bezug der Software in Frage kommen,
- Aushandeln der Bezugskonditionen mit dem Server und dem Betreibernetz,
- Überprüfen der Integrität der Software,
- Austesten der Software und Umschalten auf den neuen Arbeitsmodus,
- Überwachen des neuen Arbeitsmodus und gegebenenfalls Aktivieren alternativer Arbeitsmodi, sowie
- Reaktivieren des alten Arbeitsmodus bei Rückkehr in das Heimatnetz.

## Patentansprüche

1. Verfahren zum Konfigurieren eines Mobiltelefons, welches bereits zum Betrieb an einem Mobilfunknetz konfiguriert ist,
**dadurch gekennzeichnet,**
**daß** das Mobiltelefon für den Betrieb an einem weiteren gegenüber dem ersten Mobilfunknetz mit einem anderen Funk- und Protokollstandard arbeitenden Mobilfunknetz konfiguriert wird, indem aus dem ersten Mobilfunknetz ein das Mobiltelefon für den dem zweiten Mobilfunknetz zugrundeliegenden Funk- und Protokollstandard konfigurierendes Dienstprogramm heruntergeladen und gespeichert wird und indem das Dienstprogramm im Einflußbereich des zweiten Mobilfunknetzes aktiviert wird.

2. Verfahren nach Anspruch 1, **dadurch gekennzeichnet, daß** zum Herunterladen des Dienstprogramms das Profil des dem Mobiltelefon zugeordneten Benutzers und dessen Identität abgefragt und überprüft wird.

3. Verfahren nach Anspruch 1 oder 2, **dadurch gekennzeichnet, daß** zur Konfiguration des Mobiltelefons die in dem zweiten Mobilfunknetz verfügbaren Funk- und Protokollstandards ermittelt werden.

4. Verfahren nach einem der Ansprüche 1 bis 3, **dadurch gekennzeichnet, daß** zur Übertragung im zweiten Mobilfunknetz ein geeigneter Funkmodus ermittelt wird.

5. Verfahren nach einem der Ansprüche 1 bis 4, **dadurch gekennzeichnet, daß** zum Aktivieren des Dienstprogramms das Mobiltelefon in das zweite Mobilfunknetz eingebucht wird.

6. Verfahren nach einem der Ansprüche 1 bis 4, **dadurch gekennzeichnet, daß** das Dienstprogramm aktiviert wird und dadurch das Mobiltelefon in das zweite Mobilfunknetz eingebucht wird.

7. Verfahren nach Anspruch 5 oder 6, **dadurch gekennzeichnet, daß** das Einbuchen in das zweite Mobilfunknetz auf verschiedenen Protokollebenen durchgeführt wird.

8. Verfahren nach einem der Ansprüche 5 bis 7, **dadurch gekennzeichnet, daß** das übertragene und heruntergeladene Dienstprogramm auf Integrität überprüft wird.

9. Verfahren nach einem der Ansprüche 5 bis 8, **dadurch gekennzeichnet, daß** das übertragene und heruntergeladene Dienstprogramm auf Authentizität überprüft wird.

10. Verfahren nach Anspruch 8 oder 9, **dadurch gekennzeichnet, daß** das übertragene und heruntergeladene Dienstprogramm installiert wird.

11. Verfahren nach Anspruch 10, **dadurch gekennzeichnet, daß** von dem installierten Dienstprogramm Software aus dem zweiten Mobilfunknetz geladen wird.

12. Verfahren nach Anspruch 11, **dadurch gekennzeichnet, daß** das übertragene und heruntergeladene Dienstprogramm und die dadurch installierte neue Software ausgetestet werden und bei einem positivem Testresultat auf einen dem anderen Funk- und Protokollstandard des zweiten Mobilfunknetzes entsprechenden Arbeitsmodus umgeschaltet wird.

13. Verfahren nach Anspruch 12, **dadurch gekennzeichnet, daß** der neue Arbeitsmodus laufend kontrolliert wird.

14. Verfahren nach einem der Ansprüche 5 bis 13, **dadurch gekennzeichnet, daß** bei Rückkehr in den Einflußbereich des ersten Mobilfunknetzes der diesem zugeordnete Arbeitsmodus reaktiviert wird.

15. Mobiltelefon zur Durchführung des Verfahrens nach einem der Ansprüche 1 bis 14, **dadurch gekennzeichnet, daß** das Mobiltelefon eine mit dessen Hardware und Schnittstellen zusammenwirkende Speichereinrichtung zur Aufnahme des Dienstprogramms aufweist.

16. Mobiltelefon nach Anspruch 15, **dadurch gekennzeichnet, daß** das Mobiltelefon in Abhängigkeit von dem Betreiber des ersten Mobilfunknetzes, dem Betreiber des zweiten Mobilfunknetzes und den entsprechenden Funkund Protokollstandards konfigurierbar ist.

17. Mobiltelefon nach Anspruch 15 oder 16, **dadurch gekennzeichnet, daß** das Dienstprogramm wenigstens einen Datensatz mit dem zweiten Mobilfunknetz zugeordneten Informationen umfaßt.

18. Mobiltelefon nach einem der Ansprüche 15 bis 17, **dadurch gekennzeichnet, daß** das Dienstprogramm protokollspezifische Steuersoftware umfaßt.

19. Mobiltelefon nach einem der Ansprüche 15 bis 18, **dadurch gekennzeichnet, daß** das Dienstprogramm Applikationssoftware umfaßt.
